(19) Europäisches Patentamt
European Patent Office
Office européen des brevets

(11) **EP 4 023 114 A1**

(12) **EUROPEAN PATENT APPLICATION**

(43) Date of publication:
**06.07.2022 Bulletin 2022/27**

(51) International Patent Classification (IPC):
***A47J 19/02*** *(2006.01)*

(21) Application number: **20217585.7**

(52) Cooperative Patent Classification (CPC):
**A47J 19/027**

(22) Date of filing: **29.12.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Koninklijke Philips N.V.**
**5656 AG Eindhoven (NL)**

(72) Inventors:
• **Flößholzer, Hannes Uwe**
**5656 AE Eindhoven (NL)**
• **Haselberger, Philipp**
**5656 AE Eindhoven (NL)**
• **Schratter, Bernhard**
**5656 AE Eindhoven (NL)**

(74) Representative: **de Vries, Janna et al**
**Philips Domestic Appliances Nederland B.V.**
**High Tech Campus 42**
**5656 AE Eindhoven (NL)**

(54) **CENTRIFUGAL JUICER WITH LOW CENTER OF GRAVITY**

(57)    A juicer for obtaining juice from a food blend comprising a mixture of juice and pulp. The juicer comprises a juicer base (302), a motor (112) at least partly disposed within the juicer base (302) comprising a motor coupling (118), a juicer drum for receiving a food blend comprising a mixture of juice and pulp and separating the juice from the pulp (114) and an outlet forming a fluid path from the juicer drum to the exterior of the juicer. The juicer drum comprises an annular base section (102) comprising an outer edge and an inner edge and a drum wall (104) extending upwardly from the outer edge of the base section (102) comprising a filter (106) configured to allow the juice of the blend to pass through at least part of the drum (104) wall whilst preventing the pulp (114) from passing through the drum wall (104). The juicer drum also comprises a protrusion (108) extending upwardly from the inner edge of the base section (102) configured to house at least part of the motor coupling (118) and at least part of the motor (112). The protrusion (108) comprises a drum coupling (110) and the juicer drum is configured to rotate when the drum coupling (112) is coupled to the motor coupling (118) and the motor (112) is actuated.

FIG. 3

EP 4 023 114 A1

## Description

FIELD OF THE INVENTION

The invention relates to centrifugal juicers. In particular, the invention relates to lowering the center of gravity of centrifugal juicers.

BACKGROUND OF THE INVENTION

Extraction of juice from a blend needs mechanical force. The design of a centrifugal juicer is a commonly used principle. Conventional centrifugal juicers comprise a housing with a rotating drum wherein the rotating drum houses a cutting element (e.g. a shredding disk) and the sidewalls of the rotating drum are configured as a sieve or a filter. A motor is coupled to the cutting element and the drum so that both elements can rotate together. Gearing may be added so that they can rotate at different speeds.

The user starts the appliance and pushes food (e.g. fruits) into the drum where the food is shredded into pieces by the cutting element and juice is released. The rotating motion of the drum pushes the shredded blend towards the sidewall of the drum. The wall of the drum has a filter (e.g. small holes) which allows the juice to flow out to the exit (due centrifugal force due to the spinning drum) but prevents the rest of the pulp from going past the filter. Thus, a clear juice is obtained while pulp is collected in the drum.

It has been observed that the pulp is not always evenly distributed around walls of the drum. Uneven distribution of pulp causes uneven weight distribution across the drum which leads to an increase in noise and vibration of the juicer while the drum is rotating.

State of the art systems currently deal with this imbalance by adding complex mechanical means (e.g. suspension systems, counter masses and/or damping systems) or via electronic means (e.g. g-force measurement and/or auto-stop and restart). Complex mechanical or electronic means increase the cost of manufacturing and may result in a decreased lifespan for the product.

Thus, there is a need for a solution to deal with the imbalance caused by the unevenly distributed pulp without the use of complex means mechanical or electronic means.

SUMMARY OF THE INVENTION

The invention is defined by the claims.

According to examples in accordance with an aspect of the invention, there is provided a juicer for obtaining juice from a food blend comprising a mixture of juice and pulp, the juicer comprising:

  a juicer base;
  a motor disposed within the juicer base comprising a motor coupling;

a juicer drum for receiving a food blend comprising a mixture of juice and pulp and for separating the juice from the pulp, the juicer drum comprising:

    an annular base section comprising an outer edge and an inner edge;
    a drum wall extending upwardly from the outer edge of the base section, wherein the drum wall comprises a filter configured to allow the juice of the blend to pass through at least part of drum wall whilst preventing the pulp from passing through the drum wall; and
    a protrusion extending upwardly from the inner edge of the base section configured to contain at least part of the motor coupling and at least part of the motor, wherein the protrusion comprises a drum coupling and wherein the juicer drum is configured to rotate when the drum coupling is coupled to the motor coupling and the motor is actuated, and

  an outlet forming a fluid path for the juice to leave the juicer from the juicer drum

A juicer drum is typically used to separate juice and pulp from a blend of food it receives. This is done by rotating the juicer drum (with a motor) and allowing the juice to pass through a filter on the drum wall (pushed by centrifugal force) whilst keeping the pulp within the drum wall.

However, by keeping the pulp within the drum wall, the center of gravity of the juicer drum changes as the pulp is deposited asymmetrically within the drum wall. If the center of gravity is changed from the center of rotation, the juicer drum may become unstable during rotation.

The inclusion of a protrusion in the center of a juicer drum reduces the height of the center of gravity of the juicer drum as it can sit lower over the motor beneath. In particular, part of the motor can be housed within the protrusion.

The motor may comprise a motor shaft, a stator, a rotor, one or more bearings and a motor housing encasing at least the rotor. The motor can also provide independent control over the rotating of a second device (e.g. a blender tool). When a single motor is used to switch from rotating the blender tool to spinning the drum, a clutch arrangement may, for example, be used. The clutch arrangement may include an overrunning clutch or freewheel clutch which reacts to a change in rotational direction of the motor.

Preferably, at least a third of the shaft of the motor is contained within the protrusion along the length of the shaft. Also preferably, at least half of the length of the motor is contained within the protrusion.

At least one bearing of the motor and at least a part of the rotor and stator may be contained within the protrusion for brushed and brushless DC motors. Standard motor designs (off the shelf) can be used or a motor may be designed for use with the juicer.

The motor may be a standard DC motor with a diameter of, for example, 18mm. More generally, the diameter of the motor may range from 15mm to 100mm. The length of the motor (including the shaft and a fan) and hence the total length of the shaft which connects the fan and the clutch may be 140mm. More generally, the length may range from 100mm to 150mm. The body of the motor (excluding the fan at the bottom and the shaft projecting from the top) may be 100mm

At least a third of the length (in the direction of the axis of rotation) of the motor casing may be contained within the protrusion. The clutch may also be contained within the protrusion and coupled to the motor coupling and the motor casing.

Thus, when the juicer drum is inserted into the juicer, the motor of the juicer sits within the protrusion and thus further reduces the center of gravity of the whole juicer.

By reducing the center of gravity, the juicer can remain stable at higher angular velocities even with an asymmetric distribution of pulp throughout the drum.

The protrusion may extend upwards by at least 20mm in a direction perpendicular to the base section and preferably by at least 40mm

The protrusion dimensioned to such an extent will be able to accommodate the motor coupling and at least a part of the motor casing such that the center of gravity of the whole juicer is reduced resulting in an increased stability.

The outlet may be at a height of at least 120mm from the furthest part of the juicer base in a direction perpendicular to the base section and preferably at a height of at least 155mm

A typical glass will have a height between 120mm and 155mm and thus it would be advantageous for the outlet of a juicer to be at a height which can accommodate the glass beneath the outlet without having to lift the juicer.

The center of gravity of the juicer may be at most 120mm from the bottom of the juicer base in a direction perpendicular to the juicer base and preferably at most 100mm

The center of gravity is preferably at this low position even when a maximum capacity of food blend has been added to the juicer drum.

While lowering the center of gravity results in an increased stability, the center of gravity of the juicer at most 120mm and preferably at most 100mm from the bottom of the juicer base provides significant reduction in noise and vibrations.

The volume of the drum wall may be at least 0.5 liters and preferably at least 0.9 liters.

The said volume range of the drum will allow the user to extract one to two servings of juice in one go before the need arises to empty the residual pulp accumulated in the drum after filtration.

The width of the protrusion between the inner walls of the protrusion in any direction parallel to the base section may be at least 50mm and at most 150mm.

The said width range of the protrusion will allow to fit a standard DC motor (off the shelf) of a given power range which is typically configured for use in such juicer applications.

The drum wall may extend from the outer edge of the base section at an angle of at least 80 degrees and at most 90 degrees to the plane of the base section and preferably at 90 degrees.

At least a third of the length of the motor may be contained within the protrusion.

The goal is to have the drum as close as possible to the lowest part of the juicer to exploit the finding that lowering the center of gravity results in an increased stability. While the drum can be made to sit on the same surface as the motor, it has been seen that having at least a third of the length of the motor contained within the protrusion lowers the center of gravity and results in an increased stability of the overall juicer.

The motor may comprise a rotor, a stator, a shaft and a motor casing for containing the rotor and stator and at least part of the shaft.

At least a third of the length of the motor casing may be contained within the protrusion.

The motor may comprise a clutch and the clutch may be contained within the protrusion.

The clutch allows multiple parts to be driven by the motor, such as a cutting disc and a juicer drum. Further, a clutch arrangement is required when a single motor is used to switch from rotating the blender tool to spinning the drum. Having the clutch within the protrusion and not placing it elsewhere results in further lowering of the center of gravity and results in an increased stability of the overall juicer.

The motor may be configured to rotate the juicer drum from 900 rpm to 2000 rpm.

It has been seen that such rotational speeds of the juicer drum assist in efficient extraction of juice from the food ingredients (pulp and juice blend).

The drum wall may be annular and comprise an inner surface facing the protrusion and an outer surface facing away from the protrusion. The juicer may further comprise:

a juice guidance wall surrounding the outer surface of the drum wall such that the juice guidance wall forms a fluid path for the juice in an upward direction towards a distal edge of the juice guidance wall, wherein the distal edge is the furthest part of the juice guidance wall from the base section; and
a juice outlet formed at the distal edge of juice guidance wall.

The juice guidance wall can be coupled to the juicer drum, or it may be coupled to a clutch at the motor output.

The juice guidance wall may slope by an angle of at least 0.5 degrees relative to a direction perpendicular to the base section, with the slope away from the center of the juicer drum with increasing height from the base section. The slope is for example in the range 2 degrees to 5 degrees.

The juicer may further comprise one or more of:

> a blender configured to blend food into a food blend and output the food blend to the juicer drum; and
> a food grater disposed within or above the juicer drum, wherein the food grater is configured to blend food into a food blend.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

> Figure 1 shows an example cross section of a juicer drum with a protrusion;
> Figure 2 shows an example cross section of part of a juicer drum with a juice guidance wall;
> Figure 3 shows the cross section of a first example of a juicer; and
> Figure 4 shows the cross section of a juicer combined with a blender.

DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a juicer for obtaining juice from a food blend comprising a mixture of juice and pulp. The juicer comprises a juicer base, a motor at least partly disposed within the juicer base comprising a motor coupling, a juicer drum for receiving a food blend comprising a mixture of juice and pulp and for separating the juice from the pulp and an outlet forming a fluid path from the juicer drum to the exterior of the juicer. The juicer drum comprises an annular base section comprising an outer edge and an inner edge and a drum wall extending upwardly from the outer edge of the base section comprising a filter configured to allow the juice of the blend to pass through at least part of the drum wall whilst preventing the pulp from passing through the drum wall. The juicer drum also comprises a protrusion extending upwardly from the inner edge of the base section configured to house at least part of the motor coupling and at least part of the motor. The protrusion comprises a drum coupling and the juicer drum is configured to rotate when the drum coupling is coupled to the motor coupling and the motor is actuated.

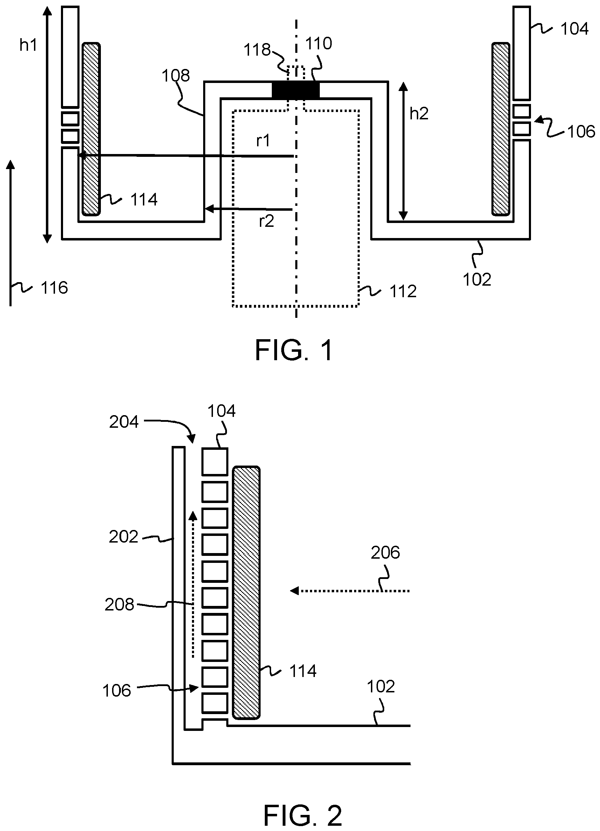

Figure 1 shows an example cross section of a juicer drum with a protrusion 108. The juicer drum comprises an annular base section 102 with a drum wall 104 extending generally upwardly from an outer periphery of the base section 102 and a protrusion 108 in the center of the drum. By having a hollow protrusion 108 in the center of the drum, the motor 112 of a juicer can sit at least partly within the protrusion 108 instead of below the juicer drum, as is typical in juicers, thus reducing the center of gravity of the juicer.

In conventional juicers, the drum sits on top of the spindle of the motor 112 whereas in the design of Figure 1, the motor 112 can be partly placed within the walls of the drum. Thus, the height of the base section 102 of the drum (from the surface on which the juicer is placed) can be lowered and the drum as a whole can be brought closer to the surface. The protrusion 108 may be designed to fit a standard motor or the motor 112 may be designed to fit a particular protrusion 108.

The protrusion 108 has a drum coupling 110 in the center of the drum such that it can couple the drum to the motor coupling 118 of the motor 112. The drum walls 104 have a filter 106 which allows juice through whilst preventing the pulp 114 from passing through the drum wall 104. The height of the wall 104 and the diameter of the base section 102 may depend on the size of the juicer and the required volume of the drum. For example, the radius r1 of the base section 102 (to the inner surface of the drum wall 104) may be 100mm and the height h1 of the drum wall 104 may be 70mm

More generally, the radius r1 of the base section may be in the range of 50mm to 150mm

More generally, the height h1 of the drum may be in the range of 50mm to 150mm.

The height h2 and radius r2 of the protrusion 108 will depend on the size of the motor 112 which is used, the required volume of the drum and the required center of gravity of the juicer (the higher the protrusion, the lower the bottom of the drum can be relative to the juicer). For example, the height h2 of the protrusion 108 may be 60mm and the radius r2 (to the outer surface of the protrusion) may be 50mm

More generally, the radius r2 of the protrusion may be in the range of 35mm to 90mm and the height h2 of the protrusion 108 may be from 30mm to 100mm.

The filter 106 may be part of the drum wall 104 or a separate device attached to the drum wall 104. In the case where the filter 106 is a separate part attached to the drum wall 104, the drum wall 104 may be provided with holes to allow the juice that has passed through the filter 106 out of the drum. The filter 106 is annular and circumferential around the center of the base section 102 and the juice goes through the filter 106 (and thus through the drum wall 104) radially from the center of the base section 102 which improves the discharge rate of the juice from the drum.

The arrow 116 shows which direction is referred to as "up" or "upwards" throughout the document. The "downwards" direction can be determined accordingly. This direction is perpendicular to the base section 102. In this example, the drum wall 104 is extending upwards at 90 degrees from the base section 102. However, the drum wall 104 may extend from 80 degrees to 90 degrees. Similarly, the outer wall of the protrusion 108 may extend from the base section 102 at between 70 degrees and 90 degrees, with a taper which narrows towards the top so that liquid flows down the outer wall of the protrusion. Additionally or alternatively, the shape of the protrusion 108 may depend on the shape of the required motor 112.

However, if the height of the juicer is lowered, the output of juice from the juicer will be closer to the surface (e.g. of a table). The lowered location of the output could prevent the placement of a normal tumbler or other containers by the user (for juice collection) and would require the user to lift the juicer. Hence, the need arises to have a feature in the appliance to lift the juice to an acceptable output height and make the juice outlet at that point.

The motor 112 may, for example, be a standard DC motor. The motor 112 may comprise a rotor, a stator, a shaft and a motor casing containing the elements of the motor 112. Preferably, at least a third of the length of the motor 112 is within the protrusion 108. Thus, preferably at least a third of the length (in the upwards/downwards direction) of the motor casing is contained within the protrusion 108. The motor 112 may also comprise a clutch. If so, the clutch may also be fully contained within the protrusion 108. The clutch is for example external to the motor casing and allows multiple parts to be driven by the motor, such as a cutting disc and the juicer drum.

Figure 2 shows an example cross section of part of a juicer drum with a juice guidance wall 202. The juice guidance wall 202 rotates with the drum 102, 104 when inserted in a juicer and the motor 112 is actuated. The juice guidance wall 202 acts as a fluid guide. A fluid path 208 is present between the outer surface of the drum wall 104 and the inner surface of the guidance wall 202, and juice is guided upwardly along the juice guidance wall in this path, thus guiding the juice towards the juice outlet 204. The juice outlet 204 is defined by the distal (upper) end of the guidance wall 202.

Thus, the juice outlet may be at a distal edge of the juice guidance wall. It may instead be set back from the distal edge by a small amount, for example formed by one or more slits or holes provided in the juice guidance wall below the distal edge. The juice outlet 204 is however formed at or close to the distal edge of juice guidance wall so that the height advantage is obtained.

Locating the juice outlet 204 near the upper part of drum instead of near the lower part, as in typical juicers, allows the drum to be placed lower down in a juicer whilst being able to fill a cup without having to lift the juicer above the cup.

Thus, the juice guidance wall 202 forces the juice to rise up such that it can be output from the juicer at a taller height. The centrifugal force 206 on the juice from rotation forces the juice upwards.

The goal is to have the drum as close as possible to the lowest part of the juicer to exploit the finding that lowering the center of gravity results in an increased stability. The juice guidance wall 202 allows the lower placement of the drum whilst still accommodating taller cups/glasses.

The juice flowing from the juice outlet 204 can be redirected downwards into a cup by, for example, a flange at the distal end of the juice guidance wall 202. The juice outlet 204 is the area from which juice flows out of the fluid path 208 created by the juice guidance wall 202. The placement of the juice outlet 204, in the height direction, will depend on the heights of the guidance wall 202 and the drum wall 104. In Figure 2, the guidance wall 202 and the drum wall 104 have the same height. Alternatively, the juice guidance wall 202 and the drum wall 104 may have different heights.

Preferably, the juice guidance wall 202 is sloped at an angle of at least 0.5 degrees away from the center of the base section 102 with the larger radius at the top than at the bottom where it connects to the annular base section 102. In other words, the juice guidance wall 202 may extend from the base section 102 at an angle of at least 90.5 degrees to the plane of the base section 102, so that the juice guidance wall tapers outwardly with increasing height (i.e. increasing distance from the base section 102).

The horizontal centrifugal force 206 pushes juice against the sloped surface of the juice guidance wall 202. The juice guidance wall 202 applies a reactive force to the juice in a direction perpendicular to the sloped surface, thus creating an overall upwards force on the juice, in particular, greater than the gravitational force on the juice, thus pushing the juice upwards when the drum is rotating. The required angle to generate the desired lift will depend on the radius and angular velocity. If the juice guidance wall 202 is not sloped, some of the juice may not leave the juicer drum when there is no more juice left in the drum (i.e. when there is no juice left to push the rest of the juice up the juice guidance wall 202).

The juice guidance wall 202 may be smooth in order to reduce the friction of the juice against the juice guidance wall 202. Additionally or alternatively, the juice guidance wall 202 may comprise structures which aid the lifting of the juice upwards. The structures may be, for example, sloped away from the base section 102 relative to the rest of the juice guidance wall 202 and/or they may force the juice to follow a spiral shape upwards.

In order for a juicer to extract juice from a blend of juice and pulp, a minimum acceleration on the blend is required. This acceleration is provided by rotating the juicer drum, creating a centrifugal force at the drum walls. The acceleration is given by:

$$a = r\omega^2$$

Where r is the radius of the drum and $\omega$ is the angular velocity of the drum. Thus, the radius and angular velocity of the drum will influence the stability of the drum when rotating.

Rotating parts have an inherent impulse, also known as precession. Simplified, the moment is a function of angular velocity and the moment of inertia of the drum:

$$M_k = \omega_P L \sin \alpha$$

$$L = J_x \omega = \frac{mr^2}{2} \omega$$

Where L is the angular momentum of the rotating drum, $J_x$ is the moment of inertia of the drum around the axis of rotation through the center of the drum, m is the mass of the drum (and any pulp and/or juice inside), $\omega_P$ is the angular velocity of precession and $\alpha$ is the angle of precession around the axis of rotation. The stabilizing moment $M_k$ helps the drum stay stable when a destabilizing impulse is applied to the drum (e.g. from an asymmetric distribution of pulp).

Instability in the rotating drum is gained by an asymmetrically distributed mass throughout the drum wall 104 moving the position of the center of gravity away from the axis of rotation. The distance of the center of gravity from the axis of rotation depends on the height of the center of gravity and the angle from the axis of rotation. The generated moment from the asymmetrically distributed mass is a function of the mass of the pulp, the radius, the angular velocity and the height of the working point. The moment from the mass of the drum is:

$$M_F = Fh_s \sin \alpha$$

$$F = mg$$

Where F is the gravitational force on the center of gravity of the rotating drum, $h_s$ is the height of the working point and m is the mass of the drum and pulp. The working point $h_s$ is the height of the center of gravity of the rotating drum.

In order for the drum to be stable, the stabilizing moment $M_K$ must counteract the destabilizing moment $M_F$:

$$M_k = M_F$$

$$\omega_P L \sin \alpha = Fh_s \sin \alpha$$

$$\omega_P = \frac{mgh_s}{J_x \omega}$$

Thus, the smaller $h_s$ is, the smaller the angular velocity of precession is, thus reducing the vibrations of the rotating drum.

The imbalance can thus be compensated by reducing the height of the center of gravity of the rotating drum which can be achieved with the inclusion of the protrusion 108 on the drum.

The use of a protrusion 108 and a juice guidance wall 202 on a juicer drum allow for the design of a self-compensating juicer which reduces rattling and shaking of the juicer during use (spinning of the drum) due to the lower center of gravity and can output juice at the height of typical cups. Thus, expensive and/or bulky mechanical or electronic components for self-compensation are not required.

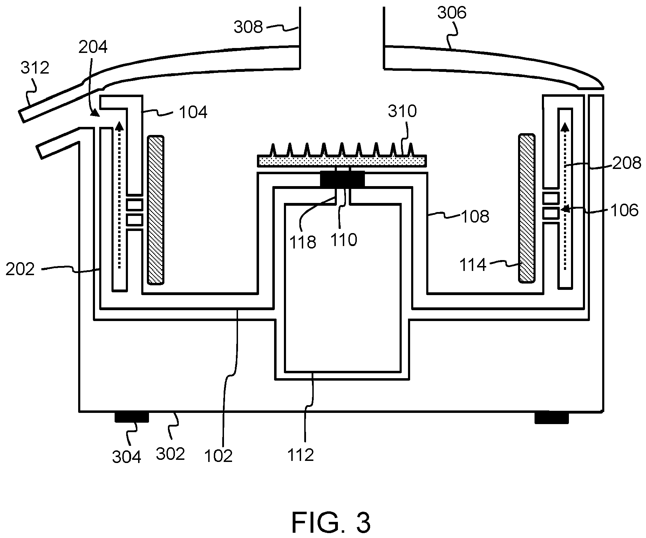

Figure 3 shows the cross section of a first example of a juicer. The juicer comprises a juicer base 302 with rubber pads 304, a juicer drum with a protrusion 108 and a juice guidance wall 202, a motor 112 with a motor coupling 118 coupled to the drum via a the drum coupling 110, a lid 306 with an opening 308, a shredding disc 310 coupled to the motor and an outlet 312. In this example, the shredding disk 310 is coupled to the motor 112 via the motor coupling 118. However, the motor coupling may further comprise a gearing system coupled to the shredding disk 310 for rotating the shredding disk 310 at a different speed to the drum.

Food is inserted into the juicer via the opening 308 of the lid 306 and guided to the shredding disc 310. The shredding disc 310 turns the food into a blend of juice and pulp 114 which is pushed to the sides of the drum due to centrifugal forces. The motor 112 turns the shredding disk 310 and the drum. The juice from the blend passes through the filter 106 (e.g. a sieve) of the drum wall 104 whilst the pulp 114 cannot pass through the filter 106 and stays inside the drum. The juice is pushed upwards through the fluid path 208 between the juice guidance wall 202 and the drum wall 104 and is then output at the outlet 312.

In this example, the juicer drum is designed such that there is a single juice outlet 204 from the drum which only allows the juice to leave the fluid path 208 at the location of the juice outlet 204. However, the juicer may contain a plurality of juice outlets 204. The juicer may then comprise means for circulating the juice towards the outlet 312.

To ensure high extraction performance with minimal instabilities, the diameter of the drum is preferably relatively large in order to keep rotational speed at a minimum. Additionally, the center of gravity of the juicer is preferably designed as low in height as possible. In conventional concepts, this would mean that the outlet 312 is too low and a drinking glass would not fit underneath. However, due to the fluid path 208 created by the juice guidance wall 202, the juice can travel upwards and be output higher up.

The juice guidance wall 202 rotates together with the drum. The juice guidance wall 202 rotates with the same angular velocity as the drum. By using the juice guidance wall 202 in combination with rotation, it is possible to lift the juice up without the need of other auxiliary equipment like fluid or air pumps.

The acceleration caused by rotating the drum can extract juice from a blend. Pulp 114 is not able to pass through the filter 106 (e.g. a sieve) and remains within the drum against the drum wall 104. Juice forced by centrifugal force is guided along the juice guidance wall 202 up to the designed height of the outlet 312. Preferably, the juice guidance wall 202 is a slightly conical (e.g. with a divergence in the range 2 to 5 degrees from bottom to top) as explained above.

The shredding disk 310 may be any cutting element capable of turning food into a blend of pulp and juice. Alternatively, instead of having a shredding disk 310, the juicer may be configured to receive the blend (e.g. from a blender).

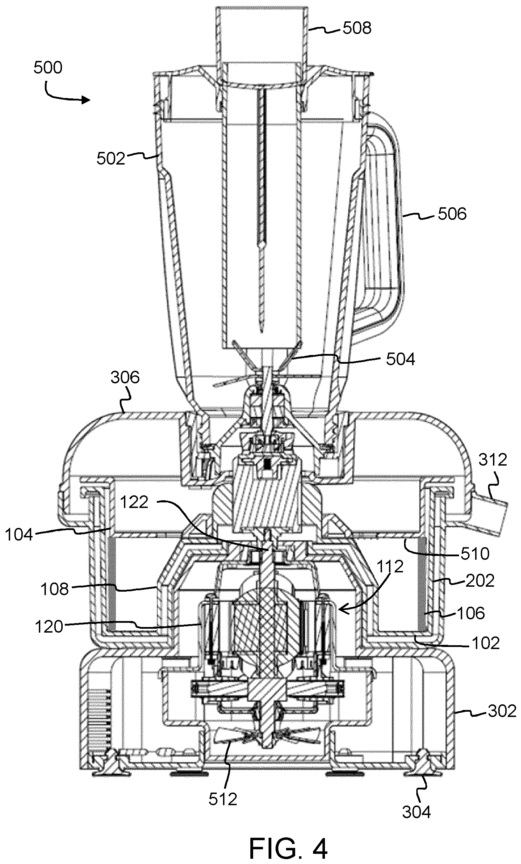

Figure 4 shows the cross section of a juicer combined with a blender 500. The juicer has a base 302 with rubber pads 304, a drum with a protrusion 108 and a juice guidance wall 202, a motor 112 coupled to the drum, an outlet 312, a lid 306 and a blender 500 coupled to the top of the lid 306 such that food blended from the blender 500 is input into the drum.

The motor 112 has a casing 120 through which an output shaft 122 projects. The output shaft 122 is coupled to the drum as explained above.

At least a portion of the motor main casing 120 is located with the space defined by the protrusion 108.

By way of example, the radius r2 of the protrusion 108 may be at least equal to a radius of the rotor of the motor and/or at least equal to a radius of the stator of the motor.

The details above in respect of the motor may be applied to a combined device and not only to the stack of devices shown in Figure 4. Alternatively, the device may have blending and juicer functions within a single juicer drum.

The blender 500 has an inlet 508 for food to be input, a handle 506 for holding the blender 500 and a set of blades 504 for blending the food. The blender 500 may be detachably coupled to the juicer. The motor 112 may be configured to rotate the set of blades 504. The motor 112 may be configured to rotate the set of blades 504 and the juicer drum separately via, for example, a switching system and/or a gearing system.

In this example, the drum has two chambers connected via a middle section 510 parallel (or near parallel) to the base section 102. The middle section 510 has gaps which allow the blend to flow to the bottom chamber of the drum. The middle section 510 may be slanted to guide the blend towards the lower chamber via the gaps. The filter 106 of the drum wall 104 is only located on the lower chamber of the drum. Thus, the pulp cannot travel upwards further than the height of the middle section 510 while the juice can flow up between the drum wall 104 and the guidance wall 202 towards the outlet 312.

Preferably the juicer base 302 has a diameter equal to or smaller than the diameter of the lid 306.

The juicer may also have a cooling fan 512 below the motor 112 for cooling the motor 112. The juicer may also have a user interface and a controller for actuating the motor 112. The controller may be further configured to actuate a switching system for switching between a "blending mode", where the motor 112 rotates the set of blades 504, and a "juicer mode" where the motor 112 rotates the drum. Thus, the appliance can function as a blender or a juicer or both.

The user interface may be used by a user to switch between said modes. The appliance can thus be switched between modes manually, but there may also be an automatic program according to which the blending and juicing follow each other.

The motor 112 may rotate the set of blades 504 and the drum at the same time but at different speeds via a gearing system.

In all examples where different rotation speeds are enabled, the motor 112 may, for example, rotate the juicer drum from 900 rpm (rotations per minute) to 2000 rpm. Preferably the motor 112 rotates the juicer drum at 1200 rpm. The motor 112 may rotate the blades 504 from 8000 rpm to 20000 rpm.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A juicer for obtaining juice from a food blend comprising a mixture of juice and pulp (114), the juicer comprising:

    a juicer base (302);
    a motor (112) disposed within the juicer base (302) comprising a motor coupling (118);
    a juicer drum for receiving a food blend comprising a mixture of juice and pulp (114) and for separating the juice from the pulp (114), the juicer drum comprising:

        an annular base section (102) comprising an outer edge and an inner edge;
        a drum wall (104) extending upwardly from the outer edge of the base section (102), wherein the drum wall (104) comprises a filter (106) configured to allow the juice of the blend to pass through at least part of the drum wall (104) whilst preventing the pulp (114) from passing through the drum wall (104); and
        a protrusion (108) extending upwardly from the inner edge of the base section (102) configured to house at least part of the motor coupling (118) and at least part of the motor (112), wherein the protrusion (108) comprises a drum coupling (110) and wherein the juicer drum is configured to rotate when the drum coupling (110) is coupled to the motor coupling (118) and the motor (112) is actuated, and

        an outlet (312) forming a fluid path from the juicer drum to the exterior of the juicer.

2. The juicer of claim 1, wherein the protrusion (108) extends upwards by at least 20mm in a direction perpendicular to the base section (102) and preferably by at least 40mm

3. The juicer of any one of claims 1 or 2, wherein the outlet (312) is at a height of at least 120mm from the furthest part of the juicer base (302) in a direction perpendicular to the juicer base (302) and preferably at a height of at least 155mm

4. The juicer of any one of claims 1 to 3, wherein the center of gravity of the juicer is at most 120mm from the bottom of the juicer base (302) in a direction perpendicular to the juicer base (302) and preferably at most 100mm

5. The juicer of any one of claims 1 to 4, wherein the volume of the drum is at least 0.5 liters and preferably at least 0.9 liters.

6. The juicer of any one of claims 1 to 5, wherein the width of the protrusion (108) is at least 50mm and at most 150mm

7. The juicer of any one of claims 1 to 6, wherein the drum wall (104) extends from the outer edge of the base section (102) at an angle of between 80 degrees and 90 degrees to the plane of the base section (102) and preferably at 90 degrees.

8. The juicer of any one of claims 1 to 7, wherein at least a third of the length of the motor (112), in a direction perpendicular to the juicer base, is contained within the protrusion (108).

9. The juicer of any one of claims 1 to 8, wherein the motor (112) comprises a rotor, a stator, a shaft and a motor casing for containing the rotor and stator and at least part of the shaft.

10. The juicer of claim 9, wherein at least a third of the length of the motor casing, in a direction perpendicular to the juicer base, is contained within the protrusion (108).

11. The juicer of any one of claims 1 to 10, wherein the motor (112) comprises a clutch and wherein the clutch is contained within the protrusion (108).

12. The juicer of any one of claims 1 to 11, wherein the motor (112) is configured to rotate the juicer drum at a speed between 900 rpm and 2000 rpm.

13. The juicer of any one of claims 1 to 12, wherein the juicer further comprises:

    a juice guidance wall (202) surrounding an outer surface of the drum wall (104) such that the juice guidance wall (202) forms a fluid path (208) for the juice in an upward direction towards a distal edge of the juice guidance wall (202), wherein the distal edge is the furthest part of the juice guidance wall (202) from the base section (102); and
    a juice outlet (204) formed at the distal edge of juice guidance wall (202).

14. The juicer of claim 13, wherein the juice guidance wall (202) slopes by an angle of at least 0.5 degrees relative to a direction perpendicular to the base section (102), with the slope away from the center of the juicer drum with increasing height from the base section.

15. The juicer of any one of claims 1 to 14, further comprising one or more of:

a blender (500) configured to blend food into a food blend and output the food blend to the juicer drum; and

a food grater (310) disposed within or above the juicer drum, wherein the food grater (310) is configured to blend food into a food blend.

FIG. 1

FIG. 2

FIG. 3

FIG. 4

Europäisches
Patentamt

European
Patent Office

Office européen
des brevets

# EUROPEAN SEARCH REPORT

Application Number

EP 20 21 7585

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CH 377 993 A (WYSS RUDOLF [CH]) 31 May 1964 (1964-05-31) * page 2, lines 5-54; claims 6, 7; figures * | 1-15 | INV. A47J19/02 |
| Y | US 4 119 542 A (YAMAOKA MIKIO ET AL) 10 October 1978 (1978-10-10) * column 6, line 53 - column 10, line 2; figures 6-8 * | 1-15 | |
| Y | DE 44 28 922 A1 (BOSCH SIEMENS HAUSGERAETE [DE]) 22 February 1996 (1996-02-22) * column 5, line 35 - column 6, line 17; figures 4-6 * | 14 | |
| Y | CH 565 541 A5 (STEPHAN & SOEHNE) 29 August 1975 (1975-08-29) * the whole document * | 1-9,12 | |
| Y | CH 286 809 A (ED AERNE AKTIENGESELLSCHAFT [CH]) 15 November 1952 (1952-11-15) * the whole document * | 1-9,12 | TECHNICAL FIELDS SEARCHED (IPC) |
| A | FR 1 235 389 A (BEHNKE HANS) 8 July 1960 (1960-07-08) * the whole document * | 1-4,6, 8-10,12, 15 | A47J |
| A | US 5 490 453 A (MACKAY SPENCER L [US]) 13 February 1996 (1996-02-13) * column 5, line 10 - column 7, line 21; figures 3, 9 * | 1,2,5-7, 9,12 | |

The present search report has been drawn up for all claims

| Place of search | Date of completion of the search | Examiner |
|---|---|---|
| Munich | 4 June 2021 | Novelli, Bruno |

EPO FORM 1503 03.82 (P04C01)

**EP 4 023 114 A1**

**ANNEX TO THE EUROPEAN SEARCH REPORT
ON EUROPEAN PATENT APPLICATION NO.**

EP 20 21 7585

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-2021

| Patent document cited in search report | | Publication date | Patent family member(s) | Publication date |
|---|---|---|---|---|
| CH 377993 | A | 31-05-1964 | NONE | |
| US 4119542 | A | 10-10-1978 | NONE | |
| DE 4428922 | A1 | 22-02-1996 | NONE | |
| CH 565541 | A5 | 29-08-1975 | NONE | |
| CH 286809 | A | 15-11-1952 | NONE | |
| FR 1235389 | A | 08-07-1960 | NONE | |
| US 5490453 | A | 13-02-1996 | NONE | |

EPO FORM P0459

For more details about this annex : see Official Journal of the European Patent Office, No. 12/82